Europäisches Patentamt

European Patent Office

Office européen des brevets

(19)

(11) Publication number: **0 212 942 B1**

(12) **EUROPEAN PATENT SPECIFICATION**

(45) Date of publication of patent specification: **03.07.91**

(51) Int. Cl.5: **G01L 7/08**, G01L 19/06, G01L 9/12, G01L 13/02

(21) Application number: **86306258.4**

(22) Date of filing: **13.08.86**

(54) **Deflecting-diaphragm pressure sensors.**

(30) Priority: **15.08.85 US 766123**

(43) Date of publication of application:
**04.03.87 Bulletin 87/10**

(45) Publication of the grant of the patent:
**03.07.91 Bulletin 91/27**

(84) Designated Contracting States:
**DE FR GB**

(56) References cited:
**US-A- 3 793 885**

**PATENT ABSTRACTS OF JAPAN, vol. 9, no. 281 (P-403)[2004], 8th November 1985 & JP-A-60 122 343 (NISSAN JIDOSHA K.K.) 29-06-1985**

(73) Proprietor: **ROSEMOUNT INC.**
**12001 West 78th Street**
**Eden Prairie, MN 55344(US)**

(72) Inventor: **Broden, David A.**
**640 Pleasant View Road**
**Chanhassen Minnesota 55317(US)**

(74) Representative: **Cross, Rupert Edward Blount et al**
**BOULT, WADE & TENNANT 27 Furnival Street London EC4A 1PQ(GB)**

## Description

The present invention relates to deflecting-diaphragm pressure sensors.

In US-A-3793885 there is disclosed a pressure sensor having a diaphragm that is deflected under pressure, the diaphragm having a central deflecting portion, an outer supporting ring portion clamped in a housing, and a reduced section web portion extending between the ring portion and the central portion. The web portion is configured to make the central portion of the diaphragm act like a free-edge diaphragm by reducing the bending moments at the outer edges where the diaphragm is supported. Such a sensor has found wide acceptance in the field, and the action of the reduced section web portion of the diaphragm is reliable and minimizes hysteresis and instability.

The sensor disclosed is US-A-3793885 is a capacitive differential pressure sensor in which the diaphragm deflects relative to a surface of a housing, the surface, towards which the diaphragm deflects, having a concave shape conforming to the deflected shape of the diaphragm under pressure, and carrying a thin stationary capacitive plate. The housing surface serves to substantially fully support the diaphragm when it is subjected to its maximum rated deflection, so that applied overpressures will not destroy or damage the diaphragm. The central portion of the diaphragm is thus fully supported by the concave housing surface when subjected to any overpressure.

The central portion of the diaphragm must be sensitive enough to provide useful signals when pressure differentials are very low, but because the line pressures may be several hundred times such differential extremely high overpressures can be experienced.

It has been found that the web portion that connects the outer mounting ring portion of the diaphragm to the central portion becomes more highly stressed than the central portion of the diaphragm, and thus the performance of the diaphragm is considerably improved over that of a uniform thickness diaphragm due to the isolation of the stresses from the mounting ring portion and the resulting minimization of hysteresis and instability of the diaphragm.

According to this invention there is provided a deflecting diaphragm comprising a housing having a recessed surface, and a diaphragm mounted on said housing to be deflected under pressure toward said surface, the diaphragm comprising a central portion, a peripheral mounting ring portion fixedly mounted on said housing and surrounding said central portion, and a web portion of reduced thickness extending between said ring portion and said central portion, whereby the central portion can deflect toward said surface relative to said ring portion under pressure, said surface being formed generally to conform to the deflection of said central portion to fully support said central portion under an overpressure as the diaphragm deflects, characterised by stop means for stopping deflection of the outer peripheral edge of said central portion relative to the housing adjacent the junction of said web portion and said central portion prior to other portions of said central portion contacting said surface.

The present invention provides a sensor having a stop means between a deflecting, edge supported diaphragm and an adjacent surface of a mounting housing, which stop means is effective before the central portion of the diaphragm is supported under overpressure, to reduce maximum stresses at the outer edge of the diaphragm while permitting additional deflection of the central portion under overpressures. The stop means is such that it will support the peripheral edge of the central portion of the diaphragm after the diaphragm has exceeded its rated operable pressure, but before the central portion is supported under maximum overpressure. The diaphragm operates across its rated pressure range without the stop means being operable.

The stop means can be formed by configuring the surface on the housing to provide a peripheral rib which protrudes toward the diaphragm more than the remainder of the surface that is formed to the shape of the deflected diaphragm, to support the peripheral edge of the central portion before the central portion of the diaphragm contacts the housing surface. Alternately, an annular rib can be formed on the outer edge of the central portion of the diaphragm itself, which rib will contact the housing surface when the diaphragm is under slightly more than its rated full scale pressure, and before the central portion contacts the housing surface.

Large overpressure excursions thus do not raise the stress in the web portion in that the stop means isolates the web portion from bending although the central portion of the diaphragm may deflect more before being fully seated on the housing surface.

This invention will now be described by way of example with reference to the drawings, in which:-

Fig. 1 is a cross sectional view of a pressure sensor according to the present invention;

Fig. 2 is a fragmentary part schematic view of a known diaphragm such as shown in US-A-3793885;

Fig. 3 is a fragmentary part schematic sectional view showing a first form of stop means for use in a sensor according to the present invention; and

Fig. 4 is a fragmentary part schematic sectional view similar to Figure 3 showing a second form of the stop means for use in a sensor according to the present invention.

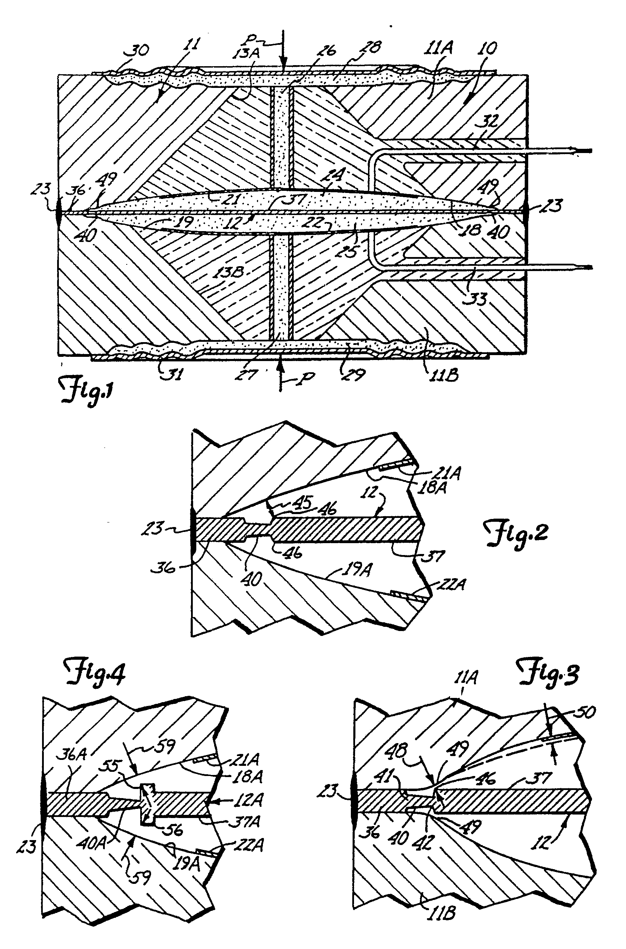

Fig. 1 shows a sensor having a housing similar to that shown in US-A-3793885, the sensor including a sensing cell 10 which in the disclosed form is a differential pressure sensor comprising a metal housing 11, made in two portions 11A and 11B. The housing portions 11A and 11B are placed together so that they face each other along a parting plane and they are separated by a measuring or sensing diaphragm 12. The housing portions 11A and 11B are metal cups having generally conical cross section cavities. The cavities 13A and 13B are filled with a rigid insulation material such as a glass or ceramic material. The insulation filling of these cavities is fused to the metal walls of the housing portions 11A and 11B, the open ends of which terminate along planes that are parallel to the diaphragm 12 when the diaphragm is at an undeflected or rest position.

In forming the sensor, the rigid insulation material in the cavities 13 in each of the individual housing portions is ground into a concave surface, opening to the terminating plane. The concave surfaces are substantially part spherical in the central portion thereof, generally as indicated at 18 and 19, respectively. These concave surfaces 18 and 19 each have a suitable thin metal coating in the central portion forming capacitor plates indicated at 21 and 22, respectively. The diaphragm 12 divides the two cavities in the housing portions to form separated chambers 24 and 25 on opposite sides of the diaphragm 12. When the sensor is an isolated sensor, as shown, the chambers which are formed are filled with a noncompressible fluid, such as a suitable oil.

The concave surfaces 18 and 19 is not formed to be part spherical or smoothly contoured all the way to the outer edge of the deflective portion of the diaphragm, in that the surfaces are configured at the outer edges to form stop means. However, the majority of the area of the surfaces 18 and 19 is ground to conform to the deflected shape of the central portion of the diaphragm 12 which is the sensing portion of the diaphragm.

The diaphragm 12 is placed between the housing sections 11A and 11B and is welded into place with a continuous peripheral bead weld 23 which joins the two housing sections 11A and 11B together, and holds the diaphragm 12 in position. The weld 23 also hermetically seals the chambers 24 and 25 on the interior of the housing defined between the surfaces 18 and 19, and thus between the capacitor plates 21 and 22 and the diaphragm 12, respectively. The diaphragm 12 is not stretched or stressed when positioned between the housing sections, but is flat in its centered or rest position.

The chambers 24 and 25 are initially open to the outer ends of the housing sections 11A and 11B through central passageways 26 and 27. Tubes forming the passageways 26 and 27 are fused into place in the insulation material in cavities 13, and the passageways 26 and 27 each lead into isolation chambers 28 and 29, respectively, that are enclosed with isolation diaphragms 30 and 31. The isolation diaphragms 30 and 31, as can be seen, cover shallow cavities in the outer ends of the housing sections to enclose the isolation chambers 28 and 29. The outer surfaces of the isolation diaphragms are then open to the fluid pressure to be sensed in a conventional manner. Usually an outer shell will overlie the isolation diaphragms and provide pressure connecting fittings for connection to pressure lines. The pressures are represented by the arrows P.

Separate metal tubes indicated at 32 and 33, respectively, are provided in the rigid insulation material and lead to the exterior of the housing sections, as shown, to provide conduits for filling the chambers 24 and 25, the connected passageways 26 and 27 and the isolation chambers 28 and 29 with the noncompressible fluid, after which the tubes 32 and 33 are sealed off. The metal tubes 32 and 33 are used for electrical leads, in that they are electrically connected to the respective capacitor plates 21 and 22. This also is conventional.

As shown, the diaphragm 12 is made up of an annular outer support ring portion 36, and a central disc-like deflecting plate sensing portion 37. The support ring portion 36 is welded with the weld 23, and is positioned and held between the housing sections 11A and 11B. Otherwise the support ring 36 can be clamped into position or otherwise held, as desired.

The central portion 37 has a circular periphery, and is joined to the support ring portion by a peripheral web portion indicated generally at 40, which is reduced in average thickness from the thickness of the support ring portion 36 and central portion 37. The web portion 40 extends for a radial distance that is selected to permit the deflection of the central portion 37 in the same manner as a "free edge" diaphragm as explained in US-A-3793885.

As shown in Figure 3, the web portion 40 has a trapezoidal (tapered) cross sectional shape, having a wider base end indicated at 41 which is integral with the inner surface of the support ring portion 36, and a narrow inner annular end 42 that is integral with the edge surface of the central portion 37. The thickness at base 41 is a maximum and the web portion tapers to a minimum thickness where it joins the central portion 37. The thickness of the web portion is selected in relation to the length of the web portion, that is the radial length, to provide flexion characteristics that evenly distribute the bending stresses along the radial length of the web portion and permit free edge flexion characteristics of the central portion 37.

The web portion 40 can otherwise be of a reduced uniform thickness between the outer support ring portion 36 and the central portion 37 of the diaphragm. The central portion 37 is the active capacitor sensing plate and it will deflect in a shape conforming to the center portions of the surfaces 18 and 19 and capacitor plates 21 and 22. There will be bending stresses at the edge of the central portion 36 much like in a free edge diaphragm. A free edge diaphragm is characterized by having zero radial bending moments at its edge. This reduces hysteresis and increases the stability of the diaphragm and makes it operate reliably.

Fig. 2 illustrates a prior art diaphragm and housing construction, as shown in US-A-3793885, and indicates general part spherical surfaces 18A and 19A which extend all the way to the parting planes (open end planes) of the housing sections. The diaphragm 12 is constructed as previously disclosed. At the location indicated at 45 by an arrow, it can be seen that the surfaces 18A and 19A provide substantial space between the corner 46 at the outer peripheral edge of the central portion 37 of the diaphragm 12 where the central portion 37 joins the web portion 40. In this known arrangement the corner 46 would contact the surface at dimension 45 at substantially the same time that the surface of the central portion 37 contacted the central part of the capacitor plate 21A formed on surface 18A or 19A under overpressure excursions. This was at diaphragm deflection caused by approximately two times the rated full scale differential pressure causing the deflection. The configuration allowed a large bending moment on the reduced web portion 40, which would contribute to hysteresis, or in other words contribute to undesired diaphragm performance where the diaphragm would not return to a zero position after the overpressure was removed.

In order to isolate the web portion between the support ring portion and the central portion from an overpressure loading of double its normal rated load, but yet provide for the full seating of the diaphragm central portion 37 against the surface of the capacitor plate 21 and 22, in the sensor shown in Fig. 3, at the location 48 the housing surface is formed with a stop rib 49 that bulges outwardly to be closer to the corner 46 of the central portion 37, where it joins the web portion 40, than the normal part spherical surface 18A or 19A shown in Figure 2. Thus, the space at dimension 48 between the corner 46 of the central portion 37 of the diaphragm 12 and the aligning interior adjacent stop rib 49 on the surface of the housing is less than that shown in Fig. 2, and forms stop means in connection with the corner 46 to provide contact on the corner 46 prior to the time that the majority of the surface of central portion 37 has contacted the capacitor plate 21 or 22, (and thus surface 18 or 19) respectively.

The dotted line representation of the central portion 37 in Figure 3 illustrates the spaced condition of the central portion 37 when the corner 46 is stopped. The dimension 50 indicates that the sensing surface of the central portion 37 (adjacent the central axis) is still slightly spaced from the capacitor plate 21 on surface 18 when the corner 46 contacts the stop rib 49.

The stop rib 49 on the housing surface is annular, and is formed on both of the housing cavity surfaces 18 and 19 adjacent the peripheral edge of the central portion 37 and in line with the edge 46 thereof where the central portion 37 joins web portion 40.

A different form of sensor is shown in Fig. 4, wherein the diaphragm 12 A is illustrated having a central portion 37A an outer support ring portion 36A and a web portion 40A that joins the central portion 37A and the mounting ring portion 36A. The dimensions of the web portion 40A and the thickness of the diaphragm 12A itself can be the same as shown in Figure 3, but in this sensor the diaphragm 12A is formed with a raised edge rib 55 on one side of the central poriton 37A, and a raised edge rib 56 on the other side of the central portion 37A adjacent to the web portion 40A. The rib 55 is a peripheral rib extending around the edge of central portion 37A. The surface 18A of the housing section shown in Fig. 4 and surface 19A of the housing section on the lower portion of the diaphragm 12A are formed as shown in Figure 2, that is with a continuous, smoothly contoured, generally part spherical surface extending all the way out to the outer end plane at the parting plane of the housing sections. Thus, where the dimension 59 is shown, the rib 55 will contact the surface 18A prior to the time that the center of the central portion 37A contacts the capacitor plate 21A on surface 15A that is shown in Figure 4.

The height of the ribs 55 and 56 is exaggerted in the drawings, so that they can be seen clearly, but only a very small raised peripheral rib around the central poriton 37A of the diaphragm will provide a stop means in combination with the housing surface 18A or 19A.

The stop means provides a contact to stop deflecting movement the outer peripheral edge of the central portion 37 or 37A after approximately 120 percent of the rated full scale differential pressure is applied, as opposed to approximately 200 percent of the rated differential pressure when the central portion surface contacts the respective adjacent housing surface.

In the sensors shown, the web portion 40 or 40A can be any desired configuration, such as a uniform thickness portion.

The diaphragms normally are made of a suitable metal such as Nispan-C, which is a high-strength alloy material.

The stop means support the diaphragm at a deflection less than the desired maximum overload deflection of the central portion of the diaphragm. The extra spacing left between the diaphragm and the capacitor plate when the stop supports the diaphragm (at 120 percent of rated pressure) is needed to provide accurate operation over the nominal pressure range. The sensor becomes non-linear when the diaphragm and capacitor plate spacing is very small. Also, it is desirable to have an increasing output as overpressure increases up to 200 percent of rated pressure so that the sensed capacitance is at least somewhat representative of the magnitude of the overpressure. Also, the greater space in the center of the surfaces 18 and 19 accommodates manufacturing variations. The ribs 49 in the housings do not have a sensing capacitor plae on them and thus do not affect the output indications. Also the ribs 49 are adjacent the open ends of the housing section where they are accessible during manufacturing operations. Under repeated overpressure conditions, the stress reduction provided by the stop means reduces fatigue in the diaphragm and extends the useful life of the sensor.

## Claims

1. A deflecting diaphragm pressure sensor comprising a housing having a recessed surface (18, 19, 18A, 19A), and a diaphragm (12, 12A) mounted on said housing (11) to be deflected under pressure toward said surface (18, 19, 18A, 19A), the diaphragm (12) comprising a central portion (37, 37A), a peripheral mounting ring portion (36, 36A) fixedly mounted on said housing (11) and surrounding said central portion (37, 37A), and a web portion (40, 40A) of reduced thickness extending between said ring (36) portion and said central portion (37, 37A), whereby the central portion (37, 37A) can deflect toward said surface (18, 19, 18A, 19A) relative to said ring portion (37, 37A) under pressure, said surface (18, 19, 18A, 19A) being formed generally to conform to the deflection of said central portion (37, 37A) to fully support said central portion (37) under an overpressure as the (12, 12A) diaphragm deflects, characterised by stop means (49, 55) for stopping deflection of the outer peripheral edge (46) of said central portion (37, 37A) relative to the housing (11) adjacent the junction of said web portion (40, 40A) and said central portion (37, 37A) prior to other portions of said central portion (37, 37A) contacting said surface (18, 19, 18A, 19A).

2. A sensor as claimed in Claim 1, characterized in that said stop means (49, 55) comprises a rib (49) formed on said surface (18, 19) adjacent the outer periphery thereof in alignment with the outer peripheral edge (46) of said central portion (37) of the diaphragm (12), said rib (49) extending toward said central portion (37) an amount greater than a smooth continuation of said surface (18, 19) bounded by said rib (49).

3. A sensor as claimed in Claim 1, characterized in that said stop means comprises a rib portion (55, 56) raised from the plane of said central portion (37A) of the diaphragm (12A) at the outer peripheral edge of said central portion (37A), which rib portion (55, 56) contacts said surface (18A, 19A) prior to the remainder of said central portion (37A) contacting said surface (18A, 19A).

4. A sensor as claimed in any preceding claim, characterised in that the housing (11) comprises two portions (11A, 11B) located on opposite sides of the diaphragm (12A, 12A, each portion (11A, 11B) providing a said surface (18, 19, 18A, 19A), and stop means (49, 55) being provided on each side of the diaphragm (12, 12A).

5. A capacitive sensor as claimed in any preceding claims, characterised in that the diaphragm (12, 12A) constitutes a first capacitor plate, and the or each said surface (18, 19, 18A, 19A) carries a further capacitor plate (21, 22).

## Revendications

1. Capteur de pression à diaphragme déformable en flexion, comprenant un boîtier pourvu d'une surface en creux (18, 19, 18A, 19A) et un diaphragme (12, 12A) monté sur ledit boîtier (11) de manière à être fléchi sous l'effet de la pression en direction de ladite surface (18, 19, 18A, 19A), le diaphragme (12) comprenant une partie centrale (37, 37A), une partie annulaire périphérique de montage (36, 36A) montée en position fixe sur ledit boîtier (11) et entourant ladite partie centrale (37, 37A) et une partie intermédiaire en lame (40, 40A) d'épaisseur réduite s'étendant entre ladite partie annulaire (36) et ladite partie centrale (37, 37A) de telle sorte que la partie centrale (37, 37A) puisse fléchir en direction de ladite surface (18, 19, 18A, 19A) par rapport à ladite partie annulaire (37, 37A) sous l'effet de la pression, ladite surface (18, 19, 18A, 19A) ayant une forme qui épouse généralement la forme fléchie de ladite partie centrale (37, 37A) pour fournir un appui complet à ladite partie centrale (37, 37A) en cas de surpression exercée sur le diaphragme (12, 12A) qui fléchit, caractérisé par des moyens de butée (49, 55) pour arrêter la flexion du bord périphérique extérieur (46) de ladite partie centrale (37, 37A) par rapport au boîtier (11), à proximité immédiate de la jonction de ladite partie intermédiaire en lame (40, 40A) et de ladite partie centrale (37, 37A), avant que d'autres regions de ladite partie centrale (37, 37A) n'entrent en contact avec ladite surface (18, 19, 18A, 19A).

2. Capteur selon la revendication 1, caractérisé en ce que lesdits moyens de butée (49, 55) comprennent une nervure (49) formée sur ladite surface (18, 19) à proximité immédiate de la périphérie extérieure de celle-ci dans l'alignement du bord périphérique extérieur (46) de ladite partie centrale (37) du diaphragme (12), cette nervure (49) s'étendant en direction de ladite partie centrale (37) dans une mesure plus grande qu'un prolongement continu de ladite surface (18, 19) limite par ladite nervure (49).

3. Capteur selon la revendication 1, caractérisé en ce que lesdits moyens de butée comprennent une partie en forme de nervure (55, 56) en relief sur le plan de ladite partie centrale (37A) du diaphragme (12A) au bord périphérique extérieur de ladite partie centrale (37A), cette partie en forme de nervure (55, 56) entrant en contact avec ladite surface (18A, 19A) avant que le reste de ladite partie centrale (37A) n'entre en contact avec ladite surface (18A, 19A).

4. Capteur selon l'une quelconque des revendications 1 à 3, caractérisé en ce que le boîtier (11) comprend deux parties (11A, 11B) situées de part et d'autre du diaphragme (12A, 12A), chaque partie (11A, 11B) présentant une surface en creux (18 19, 18A, 19A), et des moyens de butée (49, 55) étant prévus de chaque côté du diaphragme (12, 12A).

5. Capteur selon l'une quelconque des revendications 1 à 4, caractérisé en ce que le diaphragme (12, 12A) constitue une première plaque de condensateur, et en ce que ladite surface ou chacune desdites surfaces (18, 19, 18A, 19A) porte une autre plaque de condensateur (21, 22).

## Ansprüche

1. Druckfühler mit Auslenkmembran, mit einem Gehäuse mit einer mit einer Ausnehmung versehenen Oberfläche (18, 19, 18A, 19A) und einer Membran (12, 12A), die auf dem Gehäuse (11) befestigt ist, um unter Druck gegen die Oberfläche (18, 19, 18A, 19A) abgelenkt zu werden, wobei die Membran (12) einen Mittenbereich (37, 37A), einen Umfangs-Befestigungsringbereich (36, 36A), der fest an dem Gehäuse (11) befestigt ist und den Mittenbereich (37, 37A) umgibt, und einen Stegbereich (40, 40A) von verminderter Stärke aufweist, der sich zwischen dem Ringbereich (36) und dem Mittenbereich (37, 37A) erstreckt, wodurch der Mittenbereich (37, 37A) zu der Oberfläche (18, 19, 18A, 19A) relativ zu dem Ringbereich (37, 37A) unter Druck auslenkbar ist und die Oberfläche (18, 19, 18A, 19A) im wesentlichen so ausgebildet ist, daß sie mit der Auslenkung des Mittenbereichs (37, 37A) übereinstimmt, um den Mittenbereich (37A) unter einem Überdruck bei Auslenkung der Membran (12, 12A) vollständig zu unterstützen, gekennzeichnet durch eine Anschlagvorrichtung (49, 55) für das Abstoppen der Auslenkung der äußeren Umfangskante (46) des Mittenbereichs (37, 37A) relativ zu dem Gehäuse (11) angrenzend an die Verbindung zwischen dem Stegbereich (40, 40A) und dem Mittenbereich (37, 37A), bevor die anderen Bereiche des Mittenbereichs (37, 37A) an der Oberfläche (18, 19, 18A, 19A) anliegen.

2. Druckfühler nach Anspruch 1, dadurch gekennzeichnet, daß die Anschlagvorrichtung (49, 55) eine Rippe (49) aufweist, die auf der Oberfläche (18, 19) angrenzend an deren äußeren Umfang in Ausrichtung zu der äußeren Umfangskante (46) des Mittenbereichs (37) der Membran (12) ausgebildet ist und die Rippe (49) sich zu dem Mittenbereich (37) hin um einen Betrag erstreckt, der größer als eine glatte Fortsetzung der Oberfläche (18, 19) ist, die durch die Rippe (49) begrenzt wird.

3. Druckfühler nach Anspruch 1, dadurch gekennzeichnet, daß die Anschlagvorrichtung einen Rippenbereich (55, 56) aufweist, der sich von der Ebene des Mittenbereichs (37A) der Membran (12A) an der äußeren Umfangskante des Mittenbereichs (37A) erhebt, welcher Rippenbereich (55, 56) die Oberfläche (18A, 19A) kontaktiert, bevor der Rest des Mittenbereichs (37A) an der Oberfläche (18A, 19A) anliegt.

4. Druckfühler nach einem der vorhergehenden Ansprüche, dadurch gekennzeichnet, daß das Gehäuse (11) zwei Bereiche (11A, 11B) aufweist, die an gegenüberliegenden Seiten der Membran (12A, 12A) angeordnet sind, wobei jeder Bereich (11A, 11B) eine Oberfläche (18, 19, 18A, 19A) schafft und eine Anschlagvorrichtung (49, 55) auf jeder Seite der Membran (12, 12A) vorgesehen ist.

5. Druckfühler nach einem der vorhergehenden Ansprüche, dadurch gekennzeichnet, daß die Membran (12, 12A) eine erste Kondensatorplatte bildet und die oder jede Oberfläche (18, 19, 18A, 19A) eine weitere Kondensatorplatte (21, 22) trägt.

Fig.1

Fig.2

Fig.4

Fig.3